# FASCICULE DE BREVET EUROPEEN

(11) **EP 0 827 865 B1**
(45) Date de publication et mention de la délivrance du brevet: **29.03.2000**
(21) Numéro de dépôt: 97401691.7
(22) Date de dépôt: 11.07.1997
(51) Int. Cl.: B60Q 1/04, F16B 39/30

(54) **Dispositif de montage d'un bloc optique sur un élément de carrosserie d'un véhicule automobile**
Einbau einer optischen Einheit auf die Fahrzeugkarosserie
Mounting of an optical block on a vehicle bodypart

(30) Priorité: 06.09.1996 FR 9610917
(43) Date de publication de la demande: 11.03.1998
(73) Titulaire: AUTOMOBILES PEUGEOT, 75116 Paris (FR); AUTOMOBILES CITROEN, 92200 Neuilly-sur-Seine (FR)
(72) Inventeur: Arnould, Dominique, 25600 Sochaux (FR)
(74) Mandataire: Lanceplaine, Jean-Claude

(56) Documents cités:
- DE-A- 4 228 889
- DE-U- 9 217 488

## Description

La présente invention a pour objet un dispositif de montage d'un bloc optique sur un élément de carrosserie d'un véhicule automobile, comme par exemple un projecteur ou un feu arrière de signalisation.

Les blocs optiques pour véhicules automobiles comportent un boîtier dans lequel est monté un réflecteur dont la surface concave reflectrice est dirigée vers une face avant du boîtier qui est fermée par une glace.

Une plusieurs lampes sont montées de manière amovible à l'intérieur du réflecteur et le boîtier est relié à la carrosserie du véhicule par des moyens des liaison.

La fabrication et l'assemblage des pièces de structure et de carrosserie des véhicules automobiles impliquent l'existence de cotes de tolérance.

Ceci rend problématique le positionnement précis de la glace du bloc optique par rapport aux pièces de carrosserie adjacentes telles que notamment le pare-chocs et la calandre ou le panneau arrière et les ailes du véhicule.

Dans un dispositif connu, l'indexage du bloc optique par rapport aux éléments de carrosserie adjacents est réalisé au moyen de vis filetées traversant le bloc optique et venant se visser sur la paroi intérieure de la carrosserie.

Mais, ce montage présente des risques de casse du bloc optique dans le cas d'un serrage trop important.

Dans un autre dispositif connu, la continuité entre les différents éléments de la carrosserie et la face avant du bloc optique est obtenu par un bloc optique portant une patte de fixation mobile en translation et destinée à être vissée sur un support constitué par un élément de structure, avec en outre des moyens d'immobilisation en translation de la patte de fixation par rapport au bloc optique après vissage de cette patte sur le support.

Ce bloc optique a pour inconvénient de nécessiter de nombreuses pièces.

De plus, lors du vissage des organes de fixation, la perte des références isostatiques se produit. D'autre part, la fixation du bloc optique crée des contraintes résiduelles susceptibles de le dégrader.

Par ailleurs, pour des raisons esthétiques, il est indispensable que la glace du bloc optique affleure de façon parfaite avec les éléments environnant de la carrosserie.

En raison des dispersions de forme et de montage, selon l'axe longitudinal, de ces différents éléments, les fixations du bloc optique sur les éléments de carrosserie du véhicule et au moins certaines d'entre elles doivent être réglables pour absorber les écarts axiaux.

L'invention a pour but d'éviter ces inconvénients en proposant un dispositif de montage d'un bloc optique qui permet d'obtenir un affleurement de la glace du bloc optique avec les éléments de carrosserie adjacents en compensant les dispersions de fabrication des pièces de structure et de carrosserie, et ce par des moyens simples et peu coûteux.

L'invention a donc pour objet un dispositif de montage d'un bloc optique sur un élément de carrosserie d'un véhicule automobile, du type comportant un boîtier fermé par une glace et des moyens de liaison du boîtier avec l'élément de carrosserie, caractérisé en ce que les moyens de liaison comprennent :
- au moins une patte solidaire du boîtier et comportant un taraudage,
- une douille comportant un alésage central et formée de deux éléments emboîtables, disposés tête-bêche et munis d'un filetage externe pour le vissage de cette douille dans le taraudage de la patte, ladite douille étant, après vissage, déplaçable axialement par rapport à ladite patte et lesdits éléments étant déplaçables axialement l'un par rapport à l'autre,
- et une vis traversant l'alésage central de la douille et coopérant avec un écrou disposé dans l'axe du taraudage de la patte et solidaire de l'élément de carrosserie.

Selon d'autres caractéristiques de l'invention :
- le premier élément de la douille est formé par un corps cylindrique comportant à l'une de ses extrémités un épaulement et deux méplats parallèles et opposés, s'étendant sensiblement sur toute la longueur du corps,
- le second élément de la douille est formé par une collerette de diamètre sensiblement égal au diamètre du corps du premier élément et comportant deux pattes parallèles et opposées, lesdites pattes s'étendant perpendiculairement à la collerette et présentant une forme complémentaire aux méplats ménagés dans le corps du premier élément,
- le filetage de la douille et le filetage du taraudage de la patte présentent entre eux, après vissage de ladite douille dans ledit taraudage, un jeu fonctionnel,
- le filetage de la douille est formé par des portions de filets ménagées sur le corps du premier élément entre les méplats et par des portions de filets ménagées sur les pattes du second élément, les portions de filets du second élément étant décalées axialement par rapport aux portions complémentaires de filets du premier élément,
- le décalage axial entre les portions de filets du second élément par rapport aux portions de filets du premier élément est supérieur au jeu fonctionnel entre le filetage de la douille et le filetage du taraudage de la patte,
- les deux éléments de la douille sont réalisés en matière plastique moulée.

Les caractéristiques et avantages de l'invention apparaîtront à la lecture de la description qui va suivre, donnée uniquement à titre d'exemple et faite en référence aux dessins annexés, sur lesquels :
- la Fig. 1 est une vue schématique en coupe transversale de la partie inférieure d'un bloc optique muni d'un dispositif de montage selon l'invention,
- la Fig. 2 est une vue en perspective éclatée du dispositif de montage selon l'invention,
- la Fig. 3 est une vue en perspective de la douille du dispositif de montage selon l'invention,
- la Figs. 4 est une vue schématique en coupe transversale montrant la fixation du bloc optique sur un élément de carrosserie avec le dispositif de montage selon l'invention,
- la Fig. 5 est une vue en coupe brisée selon la ligne 5-5 de la Fig. 2 et à plus grande échelle du dispositif de montage selon l'invention.

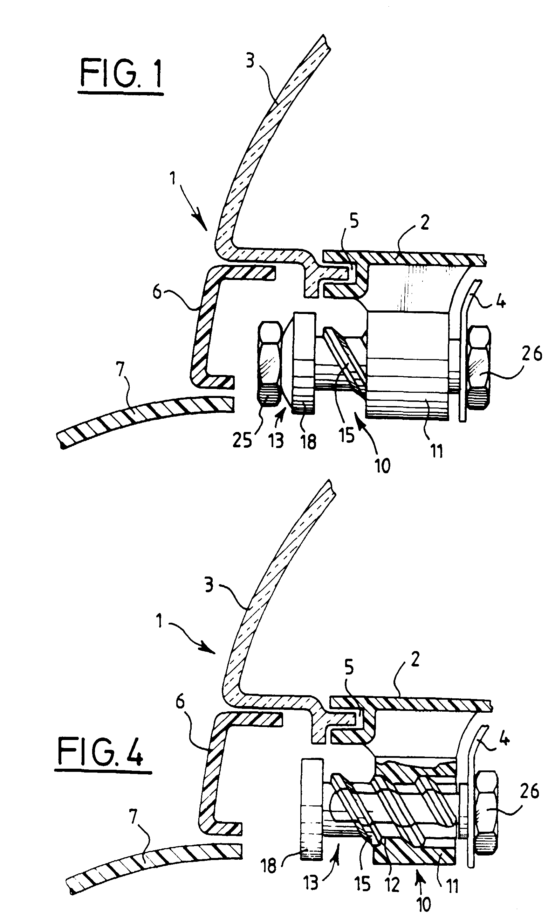

Sur la Fig. 1, on a représenté schématiquement la partie inférieure d'un bloc optique 1 qui se compose d'un boîtier 2 fermé par une glace 3 et d'un dispositif de montage 10 sur un élément de carrosserie 4.

Le boîtier 2 est, de façon bien connue, constitué d'un bloc à peu près parallélépipèdique à parois minces, réalisé par exemple en matière plastique moulée, ouvert sur sa face avant et dont la section longitudinale a sensiblement la forme d'un U.

L'extrémité avant ouverte du boîtier 2 porte une gorge périphérique 5 ouverte vers l'avant.

La glace 3, réalisée par exemple en verre ou en matière plastique, possède une forme complémentaire de celle du boîtier 2.

Son extrémité arrière est adaptée pour s'emboîter dans la gorge 5 du boîtier 2.

Le boîtier 2 est positionné dans une ouverture ménagée dans la carrosserie du véhicule de telle manière que la glace 3 vienne se plaquer sur un élément de carrosserie adjacent, comme par exemple une calandre 6 disposée au-dessus d'un pare-chocs 7.

Pour des raisons esthétiques, il est indispensable que la glace 3 du bloc optique 1 affleure de façon parfaite avec les éléments environnants de la carrosserie, comme par exemple la calandre 6.

En raison des dispersions de forme et de montage, selon l'axe longitudinal, de ces différents éléments, les fixations du bloc optique 1 sur les éléments de carrosserie du véhicule et au moins certaines d'entre elles, doivent être réglables pour absorber les écarts axiaux.

Le dispositif de montage 10 selon l'invention du bloc optique 1 sur l'élément de carrosserie 4 permet d'absorber ces écarts axiaux.

Ainsi, que représenté sur les figures, le boîtier 2 du bloc optique 1 est pourvu d'au moins une patte 11 solidaire ou venue de forme avec ledit boîtier 2.

Le boîtier 2 peut être pourvu de plusieurs pattes 11.

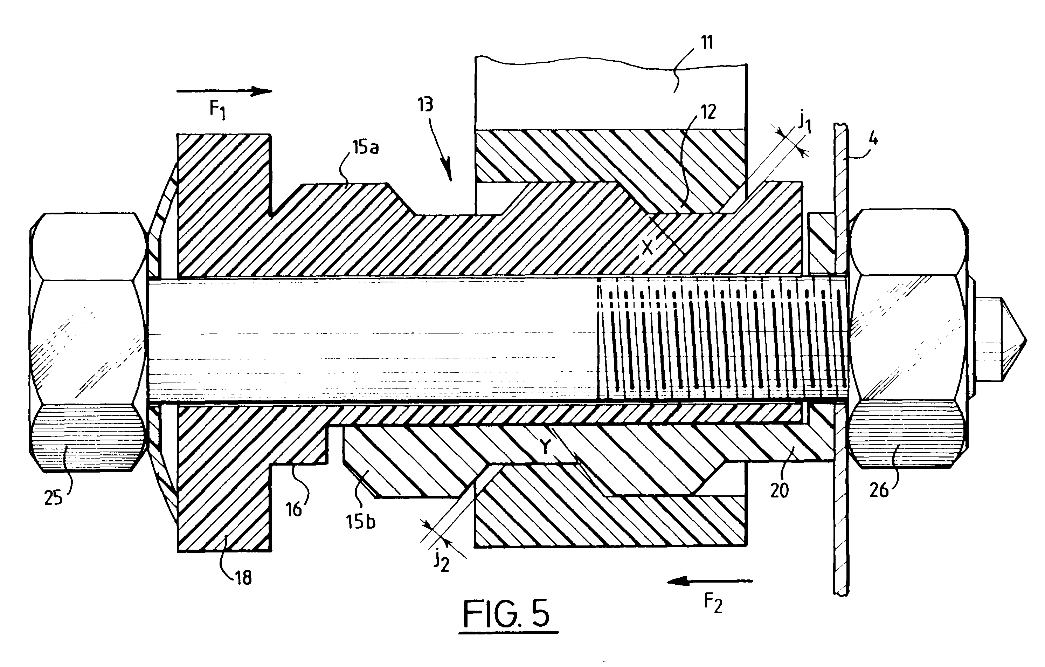

La patte 11 comporte un taraudage 12 comme représenté sur les Figs. 4 et 5.

Le dispositif de montage 10 comprend également une douille 13 comportant un alésage central 14 et muni d'un filetage externe 15.

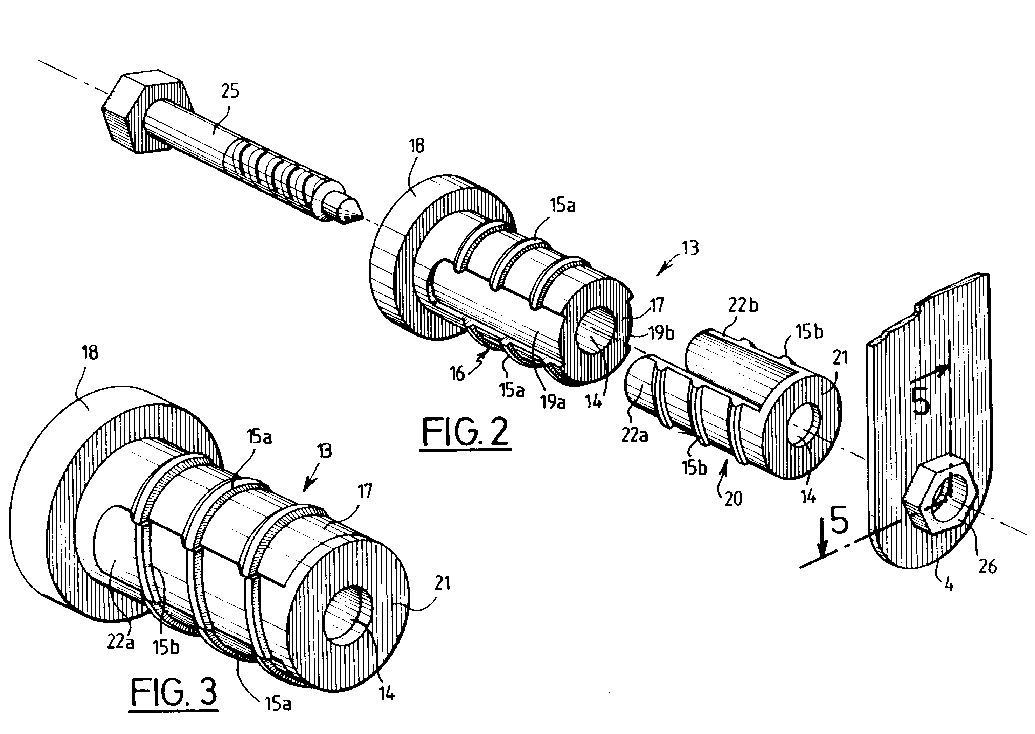

Comme représenté aux Figs. 2 et 3, la douille 13 se compose de deux éléments, respectivement 16 et 20, emboîtables et disposés tête-bêche, comme on le verra ultérieurement.

Ces éléments 16 et 20 sont réalisés notamment en matière plastique moulée.

Le premier élément 16 est formé par un corps cylindrique 17 comportant à l'une de ses extrémités un épaulement 18 et deux méplats, respectivement 19a et 19b, parallèles et opposés, s'étendant sensiblement sur toute la longueur dudit corps 17.

Le corps 17 comporte des portions de filets 15a disposées entre les méplats 19a et 19b et formant une partie du filetage 15.

Le second élément 20 est formé, d'une part, par une collerette 21 de diamètre sensiblement égal au diamètre du corps 17 du premier élément 16 et, d'autre part, par deux pattes, respectivement 22a et 22b, parallèles et opposées.

Ces pattes 22a et 22b s'étendent perpendiculairement à la collerette 21 et ont une forme complémentaire aux méplats 19a et 19b ménagés sur le corps 17 du premier élément 16.

Les pattes 22a et 22b comportent des portions de filets 15b qui forment une partie du filetage 15.

Ainsi que représenté à la Fig. 3, les éléments 16 et 20 s'emboîtent tête-bêche l'un dans l'autre de telle manière que les pattes 22a et 22b viennent se positionner dans les méplats, respectivement 19a et 19b, pour former la douille 13.

Une fois les deux éléments 16 et 20 emboîtés l'un dans l'autre, comme représenté à la Fig. 3, les portions de filets 15a du premier élément 16 et les portions de filets 15b du second élément 20 forment le filetage 15 de la douille 13.

Ainsi que représenté à la Fig. 3, les portions de filets 15b du second élément 20 sont décalées axialement par rapport aux portions de filets 15a du premier élément 16.

Par ailleurs, le filetage 15 de la douille 13 et le filetage du taraudage 12 de la patte 14 présentent entre eux, après vissage de ladite douille 13 dans ledit taraudage 12, un jeu fonctionnel pour limiter les efforts nécessaires au vissage de ladite douille dans le taraudage de ladite patte 11 et tolérer certaines imperfections de moulage.

Le décalage axial entre les portions de filets 15b du second élément 20 par rapport aux portions de filets 15a du premier élément 16 est supérieur à ce jeu fonctionnel.

Le dispositif de montage 10 comporte aussi une vis 25 destinée à traverser de part en part l'alésage 14 de la douille 13 et à coopérer avec un écrou 26 disposé dans l'axe du taraudage 12 de la patte 11 et solidaire de l'élément de carrosserie 4.

Le montage du bloc optique 1 est réalisé de la façon suivante.

Tout d'abord, la glace 3 du bloc optique 1 est alignée avec les éléments environnants de la carrosserie du véhicule automobile tels que par exemple la calandre 6 ou le capot, non représenté, au moyen de cales de réglage classiques.

Le second élément 20 de la douille 13 est monté sur le premier élément 16 en introduisant par glissement les pattes 22a et 22b sur les méplats 19a et 19b de façon à former le filetage 15, comme représenté à la Fig. 3.

Puis, la douille 13 est vissée dans le taraudage 12 de la patte 11 jusqu'à ce que la collerette 21 du second élément 20 de la douille 13 vienne en butée sur l'élément de la carrosserie 4, comme représenté à la Fig. 4.

Ainsi que montré à la Fig. 5, du fait du jeu fonctionnel j₁ existant entre le filetage 15 de la douille 13 et le taraudage 12 de la patte 11, cette douille 13 peut se déplacer axialement par rapport à la patte 11 et les deux éléments 16 et 20 de ladite douille 13 peuvent se déplacer l'un par rapport à l'autre grâce au décalage j₂ existant entre les portions de filets 15a et les portions de filets 15b, respectivement du premier élément 16 et du second élément 20.

Après la mise en butée de la collerette 21 sur l'élément de carrosserie 4 par vissage de la douille 13 dans le taraudage 12 de la patte 11, la vis 25 est engagée dans l'alésage central 14 de la douille 13 et vissée dans l'écrou 26 solidaire de l'élément de carrosserie 4.

Lors de ce mouvement, la tête de la vis 25 exerce une force F₁ sur l'élément 16 de la douille 13 et une force F₂, du côté de l'écrou 26 sur la collerette 21 de l'élément 20.

Les deux éléments 16 et 20 ont donc tendance à se rapprocher l'un de l'autre, le premier élément 16 venant en butée contre la face X du taraudage 12 de la patte 11 et le second élément 20 venant en butée contre la face Y de ce taraudage 12 de la patte 11.

Par conséquent, il se produit un pincement de la patte 12 qui bloque de ce fait l'ensemble du bloc optique 1 en rattrapant le jeu de départ.

Les éléments 16 et 20 de la douille 13 peuvent être moulés séparément et la matière de ces deux éléments peut être identique ou différente.

Le dispositif de montage selon l'invention permet de réaliser une fixation rapide du bloc optique sur l'élément de carrosserie et d'aligner ce bloc optique sur les éléments de carrosserie adjacents du véhicule automobile.

Enfin, le dispositif de montage selon l'invention peut être utilisé sur tout bloc optique d'un véhicule automobile comme par exemple un projecteur ou un feu arrière de signalisation, quelle que soit la forme du bloc optique et quel que soit le type du véhicule.

## Revendications

1. Dispositif de montage d'un bloc optique (1) sur un élément de carrosserie (4) d'un véhicule automobile, du type comportant un boîtier (2) fermé par une glace (3) et des moyens de liaison du boîtier (2) avec l'élément de carrosserie (4), caractérisé en ce que les moyens de liaison comprennent :
- au moins une patte (11) solidaire du boîtier (2) et comportant un taraudage (12),
- une douille (13) comportant un alésage central (14) et formée de deux éléments (16, 20) emboîtables, disposés tête-bêche et munis d'un filetage externe (15) pour le vissage de cette douille (13) dans le taraudage (12) de la patte (11), ladite douille (13) étant, après vissage, déplaçable axialement par rapport à ladite patte (11) et lesdits éléments (16,20) étant déplaçables axialement l'un par rapport à l'autre,
- et une vis (25) traversant l'alésage central (14) de la douille (13) et coopérant avec un écrou (26) disposé dans l'axe du taraudage (12) de la patte (11) et solidaire de l'élément de carrosserie (4).

2. Dispositif selon la revendication 1, caractérisé en ce que le premier élément (16) de la douille (13) est formé par un corps cylindrique (17) comportant à l'une de ses extrémités un épaulement (18) et deux méplats (19a, 19b) parallèles et opposés, s'étendant sensiblement sur toute la longueur du corps (17).

3. Dispositif selon les revendications 1 et 2, caractérisé en ce que le second élément (20) de la douille (13) est formé par une collerette (21) de diamètre sensiblement égal au diamètre du corps (17) du premier élément (16) et comportant deux pattes (22a, 22b) s'étendant perpendiculairement à la collerette (21) et présentant une forme complémentaire aux méplats (19a, 19b) ménagés sur le corps (17) du premier élément (16).

4. Dispositif selon la revendication 1, caractérisé en ce que le filetage (15) de la douille (13) et le filetage du taraudage (12) de la patte (11) présentent entre eux, après vissage de ladite douille (13) dans ledit taraudage (12), un jeu fonctionnel.

5. Dispositif selon l'une quelconque des revendications 1 à 4, caractérisé en ce que le filetage (15) de la douille (13) est formé par des portions de filets (15a) ménagées sur le corps (17) du premier élément (16) entre les méplats (19a, 19b) et par des portions de filets (15b) ménagées sur les pattes (22a, 22b) du second élément (20), les portions de filets(15b) du second éléments (20) étant décalées axialement par rapport aux portions complémentaires de filets (15a) du premier élément (16).

6. Dispositif selon les revendications 4 et 5, caractérisé en ce que le décalage axial entre les portions de filets (15b) du second élément (20) par rapport aux portions de filets (15a) du premier élément (16) est supérieur au jeu fonctionnel entre le filetage (15) de la douille (13) et le filetage du taraudage (12) de la patte (11).

7. Dispositif selon l'une quelconque des revendications précédentes, caractérisé en ce que les deux éléments (16, 20) de la douille (13) sont réalisés en matière plastique moulée.

## Patentansprüche

1. Vorrichtung zur Montage eines optischen Blockes (1) auf einem Karosserieelement (4) eines Kraftfahrzeugs, die ein Gehäuse (2) aufweist, das durch eine Fensterscheibe (3) geschlossen ist, sowie Mittel zur Verbindung des Gehäuses (2) mit dem Karosserieelement (4), dadurch gekennzeichnet, daß die Verbindungsmittel folgendes umfassen:
- mindestens eine Lasche (11), die mit dem Gehäuse (2) fest verbunden ist und ein Innengewinde (12) aufweist,
- eine Buchse (13), die eine zentrale Bohrung (14) aufweist und von zwei ineinandersteckbaren, umgekehrt zueinander angeordneten Elementen (16, 20) gebildet ist, die mit einem Außengewinde (15) zum Einschrauben dieser Buchse (13) in das Innengewinde (12) der Lasche (11) versehen sind, wobei die Buchse (13) nach dem Einschrauben bezüglich der Lasche (11) axial beweglich ist und die Elemente (16, 20) in Bezug aufeinander axial beweglich sind, und
- eine Schraube (25), die die zentrale Bohrung (14) der Buchse (13) durchquert und mit einer Mutter (26) zusammenwirkt, die in der Achse des Innengewindes (12) der Lasche (11) angeordnet ist und mit dem Karosserieelement (4) fest verbunden ist.

2. Vorrichtung nach Anspruch 1, dadurch gekennzeichnet, daß das erste Element (16) der Buchse (13) von einem zylindrischen Körper (17) gebildet ist, der an einem seiner Enden eine Schulter (18) und zwei parallele und einander entgegengesetzte Abflachungen (19a, 19b) aufweist, die sich im wesentlichen über die ganze Länge des Körpers (17) erstrekken.

3. Vorrichtung nach den Ansprüchen 1 und 2, dadurch gekennzeichnet, daß das zweite Element (20) der Buchse (13) von einem Innenflansch (21) gebildet ist, dessen Durchmesser im wesentlichen gleich dem Durchmesser des Körpers (17) des ersten Elements (16) ist und das zwei Lappen (22a, 22b) aufweist, die sich senkrecht zu dem Innenflansch (21) erstrecken und eine Form besitzen, die zu den auf dem Körper (17) des ersten Elements (16) vorgesehenen Abflachungen (19a, 19b) ergänzend ist.

4. Vorrichtung nach Anspruch 1, dadurch gekennzeichnet, daß das Gewinde (15) der Buchse (13) und das Innengewinde (12) der Lasche (11) nach dem Einschrauben der Buchse (13) in das Innengewinde (12) ein Funktionsspiel aufweisen.

5. Vorrichtung nach einem der Ansprüche 1 bis 4, dadurch gekennzeichnet, daß das Gewinde (15) der Buchse (13) von Gewindegangstücken (15a) gebildet wird, die auf dem Körper (17) des ersten Elements (16) zwischen den Abflachungen (19a, 19b) vorgesehen sind, sowie von Gewindegangstücken (15b), die auf den Lappen (22a, 22b) des zweiten Elements (20) vorgesehen sind, wobei die Gewindegangstücke (15b) des zweiten Elements (20) bezüglich der ergänzenden Gewindegangstücke (15a) des ersten Elements (16) axial versetzt sind.

6. Vorrichtung nach den Ansprüche 4 und 5, dadurch gekennzeichnet, daß die axiale Versetzung der Gewindegangstücke (15b) des zweiten Elements (20) bezüglich der Gewindegangstücke (15a) des ersten Elements (16) größer als das Funktionsspiel zwischen dem Gewinde (15) der Buchse (13) und dem Innengewinde (12) der Lasche (11) ist.

7. Vorrichtung nach einem der vorhergehenden Ansprüche, dadurch gekennzeichnet, daß die beiden Elemente (16, 20) der Buchse (13) aus formgegossenem Kunststoff hergestellt sind.

## Claims

1. Device for the fitting of a sealed beam unit (1) on a body part (4) of an automobile vehicle, of the type consisting of a casing (2) closed by glass (3) and the means of connecting the casing (2) with the body part (4), characterised in that the means of connection consists of:
- at least one lug (11) integral to the casing (2) and consisting of a screw thread (12),
- a screw socket (13) consisting of a centrally bored hole (14) and made up of two inter-connectable parts (16,20), arranged top to tail and provided with an external threading (15) for the screwing up of this screw socket (13) in the screw thread (12) of tne lug (11), the said screw socket (13) being, after screwing up, axially re-moveable in relation to the said lug (11) and the said parts (16,20) being axially re-moveable in relation to one another,
- and a screw (25) going through the centrally bored hole (14) of the screw socket (13) and meeting with a nut (26) arranged in the centre line of the screw thread (12) of the lug (11) and integral to the body part (4).

2. Device according to claim 1, characterised in that the first part (16) of the screw socket (13) is made up of a cylindrical body (17) consisting at one of its ends of a shoulder (18) and two parallel and opposite flat surfaces (19a, 19b), extending approximately the whole length of the body (17).

3. Device according to claims 1 and 2, characterised in that the second part (20) of the screw socket (13) is formed by a collar (21) of an approximately equal diameter to the diameter of the body (17) of the first part (16) and consisting of two tabs (22a, 22b) extending perpendicularly. to the collar (21) and presenting a complementary form to the flat surfaces (19a, 19b) arranged on the body (17) of the first part (16).

4. Device according to claim 1, characterised in that the threading (15) of the screw socket (13) and the threading of the screw thread (12) of the lug (11), after screwing up of the said screw socket (13) in the said screw thread (12) presents a functional play between them.

5. Device according to any of claims 1 to 4, characterised in that the threading (15) of the screw socket (13) is formed by sections of threads (15a) arranged on the body (17) of the first part (16) between the flat surfaces (19a, 19b) and by the sections of threads (15b) arranged on the tabs (22a, 22b) of the second part (20), the sections of threads (15b) of the second part (20) being axially displaced in relation to the complementary sections of threads (15a) of the first part (16).

6. Device according to claims 4 and 5, characterised in that the axial displacement between the sections of thread (15b) of the second part (20) in relation to the sections of thread (15a) of the first part (16), is greater than the functional play between the thread (15) of the screw socket (13) and the thread of the screw thread (12) of the lug (11).

7. Device according to any of the previous claims, characterised in that the two parts (16,20) of the screw socket (13) are made in moulded plastic.
